(19) Europäisches Patentamt
European Patent Office
Office européen des brevets

(11) **EP 4 240 625 B1**

(12) **EUROPÄISCHE PATENTSCHRIFT**

(45) Veröffentlichungstag und Bekanntmachung des Hinweises auf die Patenterteilung:
**18.09.2024  Patentblatt 2024/38**

(21) Anmeldenummer: **21798304.8**

(22) Anmeldetag: **15.10.2021**

(51) Internationale Patentklassifikation (IPC):
**B60T 8/176** (2006.01)     **B60T 8/172** (2006.01)
**B60L 7/26** (2006.01)

(52) Gemeinsame Patentklassifikation (CPC):
**B60T 8/172; B60T 8/17616;** B60L 7/26;
B60T 2270/602; B60T 2270/604

(86) Internationale Anmeldenummer:
**PCT/EP2021/078633**

(87) Internationale Veröffentlichungsnummer:
**WO 2022/096252 (12.05.2022 Gazette 2022/19)**

(54) **EFFEKTIVE REGELUNG DES RADSCHLUPFS EINES ELEKTRISCH ANGETRIEBENEN NUTZFAHRZEUGS**

EFFECTIVE CONTROL OF THE WHEEL SLIP OF AN ELECTRICALLY DRIVEN COMMERCIAL VEHICLE

CONTRÔLE EFFICACE DU PATINAGE DES ROUES D'UN VÉHICULE UTILITAIRE À PROPULSION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.11.2020  DE 102020213878**

(43) Veröffentlichungstag der Anmeldung:
**13.09.2023  Patentblatt 2023/37**

(73) Patentinhaber: **KNORR-BREMSE Systeme für Nutzfahrzeuge GmbH
80809 München (DE)**

(72) Erfinder: **THUM, Daniel
70199 Stuttgart (DE)**

(56) Entgegenhaltungen:
**WO-A1-2013/045584     DE-A1- 102017 204 000
US-A1- 2011 221 265**

**Beschreibung**

Die vorliegende Erfindung bezieht sich auf ein Regelungsverfahren und eine Regelungseinrichtung für Bremsanlagen von Nutzfahrzeugen.

Nutzfahrzeuge weisen in der Regel pneumatische Bremsanlagen auf. Kommt es bei Nutzfahrzeugen zu einem Bremsvorgang, wird Druckluft in einen Bremszylinder eingesteuert. Nach Ende des Bremsvorgangs wird diese wieder aus dem Druckluftbremszylinder ausgesteuert.

Bremsanlagen für Nutzfahrzeuge weisen in der Regel auch Anti-Blockier-Systeme (ABS) auf. Ein Anti-Blockier-System wirkt bei einem Bremsvorgang, also einem Einsteuern von Druckluft in einen Bremszylinder, einem möglichen Blockieren der Räder durch Reduzierung des Bremsdrucks entgegen. Dadurch werden insbesondere die Lenkbarkeit und die Spurtreue während eines Bremsvorgangs verbessert. Ferner kann ein Anti-Blockier-System den Rad-Bremsschlupf regeln und so den Bremsweg auf nasser Straße verkürzen.

Eine Bremsung unter Einsatz der Anti-Blockier-Funktion führt in der Regel zu einem hohen Luftverbrauch, da es in kurzen Zeitabständen zu einem kontinuierlichen Be- und Entlüften der Bremszylinder kommt. Dies schränkt die Verfügbarkeit der kompletten Bremssystemfunktionalität ein.

Eine weitere wichtige Kenngröße für Bremsen eines Nutzfahrzeugs ist die Stabilität eines Nutzfahrzeugs während einer Bremsung. Diese wird durch das Einstellen des Bremsschlupfs gewährleistet. Je genauer der Bremsschlupf eingestellt werden kann, desto höher kann die Bremsverzögerung sein, was wiederum die Stabilität verbessert.

Eine pneumatische Steuerung des Bremsschlupfs bringt allerdings physikalische Limitierungen mit sich. Aufgrund der Kompressibilität von Luft ist die Fortbewegungsgeschwindigkeit des Mediums Luft niedrig, was zu Problemen mit der Steuerbarkeit und eine reduzierten Genauigkeit der Bremse führt. Ferner ist die Ansprechgeschwindigkeit der Bremse und damit der Verzögerung im Fahrzeug niedrig.

Ein Nutzfahrzeug mit Verbrennungsmotor verfügt in der Regel über mindestens eine verschleißfreie Bremsanlage wie eine Motorbremse oder einen hydrostatischen Retarder.

Im Fall von Nutzfahrzeugen mit elektrischem Antrieb wird die verschleißfreie Bremsanlage über Rekuperation durch den elektrischen Antriebsstrang abgedeckt. Zudem verfügen Nutzfahrzeuge gemäß dem Stand der Technik über eine Reibbremse, der sogenannten Servicebremse. Wenn ein Bremsvorgang eingeleitet wird, wird zuerst das Verzögerungspotential der verschleißfreien Bremsanlage ausgenutzt. Überschreitet der Verzögerungsbedarf das Potential der verschleißfreien Bremse, wird die Servicebremsanlage betätigt und trägt zu einem Teil des Bremseffekts bei.

Aus dem Stand der Technik ist das Dokument WO 2013/045584 A1 bekannt. Dieses betrifft ein Bremssystem für ein Kraftfahrzeug, das Reibungsbremsen an den Rädern mindestens einer Achse, welche von einer Reibungsbremsensteuereinrichtung angesteuert werden, mindestens eine elektrische Maschine, die mit mindestens einem Rad verbunden ist und von einer Elektroantriebssteuereinrichtung angesteuert wird, Mittel zur Erfassung einer Verzögerungsanforderung, insbesondere ein Bremspedal mit Pedalwinkelsensor, eine Radschlupfregeleinrichtung und eine Momentenverteileinrichtung umfasst. Das oder die Mittel zur Erfassung einer Verzögerungsanforderung ist bzw. sind mit der Radschlupfregeleinrichtung verbunden, welche nach Maßgabe der Verzögerungsanforderung Sollbremsmomente für jedes Rad vorgibt, wobei die Radschlupfregeleinrichtung mit einer Momentenverteileinrichtung verbunden ist, welche mit der Reibungsbremsensteuereinrichtung und der Elektroantriebssteuereinrichtung verbunden ist und nach Maßgabe der Sollbremsmomente Reibungsbremsanforderungen an die Reibungsbremsensteuereinrichtung und Generatorbremsanforderungen an die Elektroantriebssteuereinrichtung vorgibt. Weiterhin betrifft das Dokument ein Verfahren zur Steuerung eines Bremssystems.

Dokument DE 10 2017 204000 A1 beschäftigt sich mit einem Verfahren zur Antiblockierregelung eines Fahrzeugs, bei dem während eines Bremsvorgangs folgende Schritte ablaufen: a. wenigstens einer der Elektromotoren baut ein Rekuperationsmoment an wenigstens einem der Räder auf bis ein maximales Rekuperationsmoment erreicht ist, b. ein Bremsmoment der hydraulischen Bremsanlage wird aufgebaut bis ein Sollschlupf an diesem wenigstens einen der Räder erreicht ist, c. der wenigstens eine der Elektromotoren regelt an diesem wenigstens einen der Räder den Sollschlupf ein und der wenigstens eine der Elektromotoren wird um einen Betrag auf ein Rekuperationsmoment zurückgeregelt, welches im Intervall, [1/2 maximales Rekuperationsmoment; maximales Rekuperationsmoment] liegt und das Bremsmoment der hydraulischen Bremsanlage wird um den gleichen Betrag erhöht, und d. der Sollschlupf an diesem wenigstens einen der Räder wird stationär geregelt mittels des wenigstens einen Elektromotors.

Dokument US2011/221265 A1 beschreibt ein Verfahren zum Betreiben eines Fahrzeugbremssystems, das sowohl über Reibungs- als auch über Rückgewinnungsbremsfähigkeiten verfügt. Gemäß einer Ausführungsform überwacht das Verfahren den Radschlupf an einer Anzahl von Fahrzeugrädern, bewertet den individuellen Radschlupf an einem einzelnen Rad sowie den kollektiven Radschlupf, an dem mehrere Räder beteiligt sind, vergleicht den Radschlupf mit einem oder mehreren geschwindigkeitsbasierten Schwellenwerten, die auf der Fahrzeuggeschwindigkeit basieren, und verwendet die Vergleiche, um dabei zu helfen, zwischen den Situationen zu unterscheiden, die ein Auskuppeln der regenerativen Bremsvorgänge rechtfertigen, und den Situationen, die dies nicht tun.

Wird während eines Verzögerungsvorgangs an einem Rad ein definierter Bremsschlupfgrenzwert erreicht (Blockieren eines Rades) wird die weitere Verzögerung im Stand der Technik allein durch die pneumatische Servicebremse eingestellt. Der Grund hierfür ist, dass Retardern und der Motorbremse bei sicherheitskritischen Bremsungen kein Vertrauen geschenkt werden kann bzw. diese auch nur bedingt steuerbar sind.

Es ist daher eine Aufgabe der vorliegenden Erfindung, ein Bremsverfahren und eine Bremseinrichtung bereitzustellen, mit welcher physikalische Limitierungen bei der Steuerung des Bremsschlupfs aufgehoben werden können und eine verbesserte Steuerbarkeit und eine verbesserte Genauigkeit der Bremse erreicht werden kann. Ein weiteres Ziel der vorliegenden Erfindung ist es, die Ansprechgeschwindigkeit der Bremse, den Bremsweg und die Verzögerung des Fahrzeugs zu minimieren.

Diese Aufgabe wird gelöst von einem Regelungsverfahren für die Bremsen eines Nutzfahrzeugs gemäß Anspruch 1 sowie einer Regelungseinrichtung gemäß Anspruch 6.

Ein erfindungsgemäßes Regelungsverfahren für die Bremsung eines Nutzfahrzeugs, das zumindest einen Elektromotor aufweist, umfasst die folgenden Schritte:

a) Empfangen einer Verzögerungsanforderung durch ein Bremssystem; dieses kann ein zentrales oder dezentrales Bremssystem sein

b) Berechnen von mindestens einem Bremsmoment durch eine Regelungseinrichtung;

c) Erzeugen des in Schritt b) berechneten Bremsmoments durch mindestens einen Elektromotor;

d) wiederholtes Ermitteln des Bremsschlupfs an mindestens einem Rad (R) des Nutzfahrzeugs;

e) falls der in Schritt d) ermittelte Bremsschlupf eiens Rades einen vorbestimmten stabilitätskritischen Grenzwert erreicht oder wenn das in Schritt b) errechnete

Bremsmoment das maximale Bremsmoment des Elektromotors übersteigt: Verteilen des im Schritt b) berechneten Bremsmoments auf den mindestens einen Elektromotor und mindestens eine weitere Bremse.

Die mindestens eine weitere Bremse kann beispielsweise eine pneumatische Servicebremse, eine elektromechanische Bremse oder ein Retarder sein.

Vorzugsweise wird das Bremsmoment durch die Regelungseinrichtung an jedem Rad ermittelt. Auch der Bremsschlupf wird vorzugsweise an jedem Rad ermittelt.

Das Ansprechverhalten der Steuerbarkeit von elektrischen Antrieben ist deutlich besser als das von einer pneumatischen Bremsanlage, also Servicebremse, und die Einstellung des Rad-Bremsschlupfs erfolgt daher vorwiegend mit dem elektrischen Motor. Daher wird die Verzögerung zunächst rein mit dem mindestens einen elektrischen Motor umgesetzt. Erst wenn die Verzögerungsanforderung das Bremsvermögen des Elektromotors übersteigt oder wenn der Bremsschlupf der Räder einen stabilitätskritischen Grenzwert erreicht, wird das berechnete Bremsmoment auf die mindestens eine weitere Bremse, wie beispielsweise pneumatische Servicebremse, und den mindestens einen Elektromotor verteilt, d.h. es wird eine Bremsung mit mindestens einer weiteren Bremse parallel zur Bremsung durch den mindestens einen Elektromotor ausgeführt.

Gemäß einer Ausführungsform wird das Bremsmoment individuell pro Rad berechnet, und in Schritt c) wird das Bremsmoment von mindestens einem einem Rad zugehörigen Elektromotor erzeugt. Die weitere Bremse wie beispielsweise pneumatische Servicebremse baut bei Bedarf ein konstantes Grundbremsmoment auf, welches für eine stabile Bremsung wichtig ist. Der Elektromotor übernimmt die Feinregelung im ABS-Fall.

Gemäß der ersten Ausführungsform wird weiter vorzugsweise der Bremsschlupf von mindestens einem Rad des Nutzfahrzeugs mit mindestens einem Elektromotor, welcher einem Rad zugeordnet ist, geregelt (vorzugsweise an mehreren Rädern bzw. jedem Rad). Dadurch kann zum einen der Bremsschlupf genauer eingestellt werden, da ein Elektromotor schneller anspricht als eine weitere Bremse wie beispielsweise pneumatische Bremse, und somit kann der Bremsweg des Fahrzeugs reduziert werden. Zum anderen wird für nachfolgende Bremsvorgänge das Bremspotential nicht oder zumindest weniger eingeschränkt, da während der Bremsung nur wenig Luft verbraucht wird (da die mindestens eine weitere Bremse, wie beispielsweise pneumatische Servicebremse, nur für das Herstellen eines Grundbremsmoments verantwortlich ist).

In einer zweiten Ausführungsform wird in Schritt b) das Bremsmoment zwar radindividuell berechnet, aber in Schritt c) wird das Bremsmoment von mindestens einem einer Achse zugehörigen Elektromotor erzeugt. Das Bremsmoment wird beim Bremsen verteilt auf die Achsbremse, also Elektromotor, und wenn nötig die mindestens eine weitere Bremse wie beispielsweise Servicebremse.

Weiter vorzugsweise wird in der zweiten Ausführungsform der Bremsschlupf an mindestens einem Rad des Nutzfahrzeugs dann mit der mindestens einen weiteren Bremse wie beispielsweise Servicebremse geregelt, wenn nötig. Falls das erforderliche Bremsmoment durch den Elektromotor erzeugt werden kann, wird die Servicebremse nicht benötigt, denn wenn die an die Verzögerung gestellten Bremsmomente gleich sind und alleine mit dem achsindividuellen Elektromotor abgedeckt werden können, ist kein Eingriff der weiteren Bremse wie beispielsweise Servicebremse nötig. Durch den achsindividuellen Elektromotor wird achsweise stets das kleinste geforderte Moment eingestellt, sofern das elektrisch verfügbare Antriebsmoment das zulässt. Das zusätzliche Radmoment bzw. das Feineinstellen des Bremsschlupfs am Rad im ABS-Fall erfolgt bei Bedarf über die mindestens eine weitere Bremse, wie beispielsweise die pneumatische Service-Bremsanlage.

Dadurch ist der Luftverbrauch bei Bremsungen reduziert, und das Bremsvermögen wird für nachfolgende Bremsungen nicht bzw. weniger eingeschränkt. Da der größte Teil der Bremsungen durch den Elektromotor ausgeführt wird und nur die Feineinstellung des Bremsschlupfs durch die mindestens eine weitere Bremse wie beispielsweise Servicebremse erfolgt, kann der Luftverbrauch entsprechend minimiert werden.

Eine erfindungsgemäße Regelungseinrichtung für die Regelung eines Bremssystems eines Nutzfahrzeugs ist dazu eingerichtet, mindestens ein Bremsmoment zu berechnen und dieses durch mindestens einen Elektromotor zu erzeugen, wobei die Regelungseinrichtung ferner dazu eingerichtet ist, wiederholt den Bremsschlupf an mindestens einem Rad des Nutzfahrzeugs zu ermitteln, und falls der ermittelte Bremsschlupf einen vorbestimmten stabilitätskritischen Grenzwert erreicht oder wenn das errechnete Bremsmoment das maximale Bremsmoment des Elektromotors übersteigt, das berechnete Bremsmoment auf den mindestens einen Elektromotor und mindestens eine weitere Bremse zu verteilen.

Vorzugsweise erfolgt die Berechnung des Bremsmoments radindividuell oder achsindividuell. Es wird im achsindividuellen Fall geprüft, ob es achsindividuelle Gemeinsamkeiten gibt, damit der Elektromotor (im achsindividuellen Fall) einen Teil des Bremsmoments übernehmen kann

Bei der ersten Ausführungsform, einer radindividuellen Regelung, wird das Bremsmoment radindividuell berechnet und dann von jedem einem Rad zugehörigen Elektromotor erzeugt, wobei der Bremsschlupf an mindestens einem Rad des Nutzfahrzeugs mit mindestens dem einen Elektromotor feingeregelt wird.

Bei der zweiten Ausführungsform, wenn das Bremsmoment achsindividuell berechnet wird, wird das Bremsmoment durch jedem einer Achse zugehörigen Elektromotor erzeugt, und der Bremsschlupf an mindestens einem Rad des Fahrzeuges wird mit der weiteren Bremse, wie beispielsweise pneumatischen Servicebremse, feingeregelt, wenn unterschiedliche Bremsmomente vorliegen.

Während der Bremssteuerung muss im achsindividuellen Fall darauf geachtet werden, dass durch den Drehzahltransfer des Differentials kein ungewollter Brems- bzw. Antriebsschlupf entstehen kann. Dies wird bei der Berechnung des Bremsmoments berücksichtigt und von der Antriebssteuerung entsprechend umgesetzt. Das Einhalten der Drehzahlen erfolgt nach folgender Gleichung

$$n_1 - i_0 \cdot n_2 - (1 - i_0) \cdot n_s = 0$$

wobei $n_1$ und $n_2$ die Drehzahlen der angetriebenen Fahrzeugräder sind und $n_s$ die Drehzahl des Hohlrads des Getriebes und somit der Antriebs- bzw. Kardanwelle ist. $i_0$ ist in diesem Fall die Standardübersetzung für den normalen Fahrzeugbetrieb.

Im Folgenden werden bevorzugte Ausführungsformen der vorliegenden Erfindung unter Bezugnahme auf die beiliegenden Figuren näher erläutert.

Fig. 1    zeigt einen Bremsvorgang gemäß einer ersten Ausführungsform der vorliegenden Erfindung, in welcher ein radindividueller elektrischer Antrieb vorgesehen ist, d.h. in der pro Rad ein Elektromotor vorhanden ist.

Fig. 2    zeigt einen Bremsvorgang gemäß einer zweiten Ausführungsform der vorliegenden Erfindung, in welcher ein achsindividueller elektrischer Antrieb vorgesehen ist, d.h. in der pro Achse ein Elektromotor vorhanden ist.

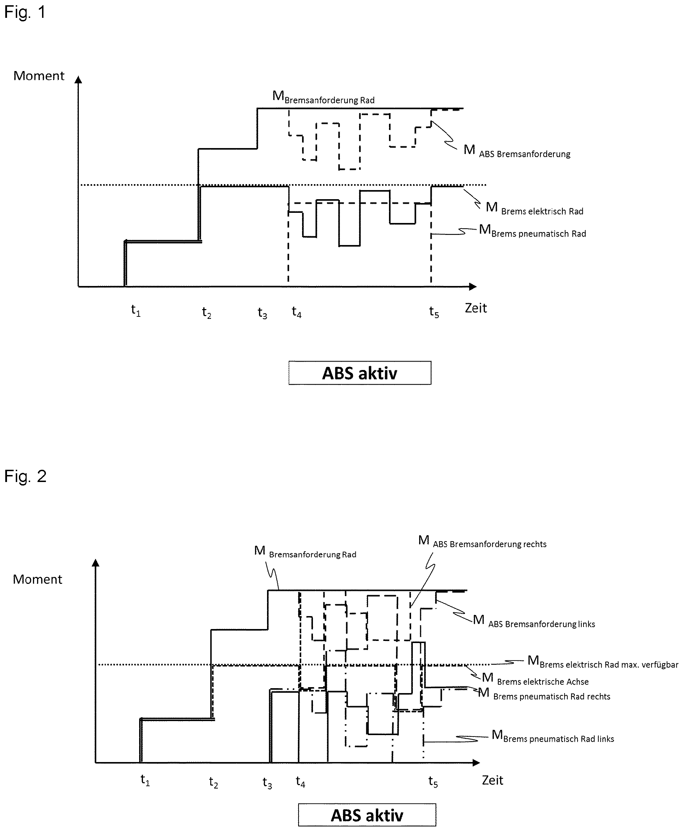

In Fig. 1 sind mehrere Bremsmomente über die Zeit aufgetragen. Bis zum Zeitpunkt $t_1$ ist am entsprechenden Rad keine Bremsanforderung vorhanden, somit wirkt auch kein Bremsmoment zum Erreichen der Bremsanforderung ($M_{Bremsanforderung\ Rad}$). Dieses Bremsmoment zum Erreichen der Bremsanforderung ($M_{Bremsanforderung\ Rad}$) steigt zum Zeitpunkt $t_1$ sprunghaft an, bleibt bis zum Zeitpunkt $t_2$ gleich, und steigt ab dem Zeitpunkt $t_2$ weiter an. Das Bremsmoment zum Erreichen der Bremsanforderung ($M_{Bremsanforderung\ Rad}$) bleibt bis zum Zeitpunkt $t_3$ gleich, und steigt dann nochmals sprunghaft an. In Fig. 1 ist ferner gezeigt, dass zum Zeitpunkt $t_1$ das Bremsmoment des Elektromotors ($M_{Brems\ elektrisch\ Rad}$) an einem Rad ansteigt, bis zum Zeitpunkt $t_2$ gleich bleibt, zum Zeitpunkt $t_2$ nochmals sprunghaft ansteigt, allerdings nur bis zum maximal verfügbaren Bremsmoment des Elektromotors für das entsprechende Rad ($M_{Brems\ elektrisch\ Rad\ max.\ verfügbar}$). Bis zum Zeitpunkt $t_4$ bleibt dann das Bremsmoment des Elektromotors für das Rad auf gleichem Niveau. Da das erforderliche Bremsmoment pro Rad ($M_{Bremsanforderung\ Rad}$) jedoch höher ist als das maximale Bremsmoment, das der elektrische Motor zur Verfügung stellen kann ($M_{Brems\ elektrisch\ Rad\ max.\ verfügbar}$), wird ab dem Zeitpunkt $t_4$ noch ein zusätzliches Bremsmoment pro Rad durch die pneumatische Servicebremse ($M_{Brems\ pneumatisch\ Rad}$) erzeugt. Dieses wird bis zum Zeitpunkt $t_5$ erzeugt. Dieses ist zwischen dem Zeitpunkt $t_4$ und $t_5$ konstant, und deckt somit ein konstantes Grundbremsmoment ab. Zwischen dem Zeitpunkt $t_4$ und $t_5$ wird allerdings auch ein vorbestimmter stabilitätskritischer Grenzwert für den Bremsschlupf überschritten (ABS-Fall), weswegen der elektrische Motor E sein erzeugtes Bremsmoment ($M_{\text{Brems elektrisch Rad}}$) entsprechend moduliert und immer stufenweise abändert - allerdings höchstens bis zum maximalen Bremsmoment, das der Elektromotor aufbringen kann ($M_{\text{Brems elektrisch Rad max. verfügbar}}$). Entsprechend ändert sich dann auch die Bremsanforderung für das Rad und somit das ABS-Bremsmoment zum Erreichen der Bremsanforderung ($M_{\text{ABS Bremsanforderung}}$). Nachdem der Bremsschlupf wieder einen vorbestimmten stabilitätskritischen Grenzwert unterschritten hat (Zeitpunkt ts), ist das Antiblockiersystem nicht mehr aktiv, und das pneumatische Bremsmoment durch die Servicebremse ($M_{\text{Brems pneumatisch Rad}}$) kann entsprechend heruntergefahren werden. Das Bremsmoment, welches durch den Elektromotor auf ein Rad aufgebracht wird ($M_{\text{Brems elektrisch Rad}}$), steigt wieder bis zu dessen maximalen Wert ($M_{\text{Brems elektrisch Rad max. verfügbar}}$) an.

In Fig. 2 ist die achsindividuelle Regelung des elektrischen Antriebs gezeigt. Das Bremsmoment, welches zur Erfüllung einer Bremsanforderung ($M_{\text{Bremsanforderung Rad}}$) wirken muss, ist ähnlich wie in Fig. 1. Auch das maximale Bremsmoment, was an einem Elektromotor pro Rad erzeugt werden kann ($M_{\text{Brems elektrisch Rad max. verfügbar}}$), ist ähnlich wie in Fig. 1. Hier zeigt sich allerdings, dass ab dem Zeitpunkt $t_3$ sich die Bremsmomente des Elektromotors ($M_{\text{Brems elektrisch Achse}}$) und der Servicebremse ($M_{\text{Brems pneumatisch Rad rechts}}$ , $M_{\text{Brems pneumatisch Rad links}}$) entsprechend anders verhalten. Das elektrisch erzeugte Bremsmoment auf die Achse ($M_{\text{Brems elektrisch Achse}}$) ist weitestgehend gleichbleibend, mit zwei kleinen Abfällen. Ab dem Zeitpunkt $t_4$, wenn ein bestimmter stabilitätskritischer Grenzwert überschritten wird, muss der Bremsschlupf geregelt werden. Dazu werden die ABS-Bremsmomente an zwei Rädern ($M_{\text{ABS Bremsanforderung rechts}}$, $M_{\text{ABS Bremsanforderung links}}$) moduliert und die beiden Bremsmomente der Servicebremse am rechten Rad ($M_{\text{Brems pneumatisch Rad rechts}}$) und am linken Rad ($M_{\text{Brems pneumatisch Rad links}}$) entsprechend geregelt, da diese für die Feineinstellung des Bremsschlupfs verantwortlich sind. Ab dem Zeitpunkt $t_5$ regelt wieder hauptsächlich der Elektromotor das Bremssystem.

Die vorliegende Erfindung bezieht sich auf ein Regelungsverfahren und eine Regelungseinrichtung für Bremsanlagen für Nutzfahrzeuge, wobei hier Bremsschlüpfe sowohl von mindestens einem Elektromotor sowie mindestens einer weiteren Bremse wie einer pneumatischen Servicebremse eingestellt werden können. Eine Verzögerung bei einer normalen Bremsanforderung wird rein mit mindestens einem elektrischen Motor umgesetzt, und wenn eine Verzögerungsanforderung das Potential des mindestens einen elektrischen Motors übersteigt oder der Bremsschlupf zu hoch wird, wird das berechnete Bremsmoment entsprechend auf den mindestens einen elektrischen Motor und eine weitere Bremse wie zum Beispiel pneumatische Servicebremse verteilt. Da Ansprechverhalten und Steuerbarkeit von elektrischen Antrieben deutlich besser sind als von pneumatischen Bremsanlagen, werden diese Vorteile beim vorliegenden Bremsverfahren und bei der vorliegenden Bremseinrichtung entsprechend ausgenutzt.

BEZUGSZEICHENLISTE

1    Bremssystem
2    Regelungseinrichtung
E    Elektromotor
S    Servicebremse

| | |
|---|---|
| $M_{\text{Bremsanforderung Rad}}$ | Bremsmoment zum Erreichen der Bremsanforderung |
| $M_{\text{ABS Bremsanforderung}}$ | ABS-Bremsmoment für Bremsanforderung |
| $M_{\text{Brems elektrisch Rad max. verfügbar}}$ | maximal verfügbares Bremsmoment pro Rad durch Elektromotor |
| $M_{\text{Brems elektrisch Rad}}$ | Bremsmoment pro Rad durch Elektromotor |
| $M_{\text{Brems pneumatisch Rad}}$ | Bremsmoment pro Rad durch pneumatische Servicebremse |
| $M_{\text{ABS Bremsanforderung rechts}}$ | ABS-Bremsmoment für Bremsanforderung rechtes Rad |
| $M_{\text{ABS Bremsanforderung links}}$ | ABS-Bremsmoment für Bremsanforderung linkes Rad |
| $M_{\text{Brems elektrisch Achse}}$ | Bremsmoment pro Achse durch Elektromotor |
| $M_{\text{Brems pneumatisch Rad rechts}}$ | Bremsmoment rechtes Rad durch pneumatische Servicebremse |
| $M_{\text{Brems pneumatisch Rad links}}$ | Bremsmoment linkes Rad durch pneumatische Servicebremse |

**Patentansprüche**

1. Regelungsverfahren für die Bremsung eines Nutzfahrzeugs (N), welches mindestens einen Elektromotor (E) aufweist, umfassend die folgenden Schritte:

   a) Empfangen einer Verzögerungsanforderung durch ein Bremssystem (1);

b) Berechnung von mindestens einem Bremsmoment durch eine Regelungseinrichtung (2);

c) Erzeugen des in Schritt b) berechneten Bremsmoments durch den mindestens einen Elektromotor (E);

d) wiederholtes Ermitteln des Bremsschlupfs an mindestens einem Rad (R) des Nutzfahrzeugs (N);

e) falls der in Schritt d) ermittelte Bremsschlupf eines Rades einen vorbestimmten stabilitätskritischen Grenzwert (G) erreicht oder wenn das in Schritt b) errechnete Bremsmoment das maximale Bremsmoment des Elektromotors (E) übersteigt: Verteilen des im Schritt b) berechneten Bremsmoments auf den mindestens einen Elektromotor (E) und mindestens eine weitere Bremse (S).

2. Regelungsverfahren gemäß Anspruch 1 oder 2, wobei in Schritt b) das Bremsmoment radindividuell berechnet wird, und in Schritt c) das Bremsmoment von mindestens einem einem Rad zugehörigen Elektromotor (E) erzeugt wird.

3. Regelungsverfahren gemäß Anspruch 1 oder 2, ferner einen Schritt f1) aufweisend: f1) Regeln des Bremsschlupfs an mindestens einem Rad (R) des Nutzfahrzeugs (N) mit mindestens einem Elektromotor (E).

4. Regelungsverfahren gemäß Anspruch 1, wobei in Schritt b) das Bremsmoment radindividuell berechnet wird, und in Schritt c) das Bremsmoment von mindestens einem einer Achse zugehörigen Elektromotor (E) erzeugt wird.

5. Regelungsverfahren gemäß Anspruch 1 oder 4, ferner einen Schritt f2) aufweisend:
f2) Regeln des Bremsschlupfs an mindestens einem Rad (R) des Nutzfahrzeugs (N) mit der mindestens einen weiteren Bremse (S), falls nötig.

6. Regelungseinrichtung (2) für die Regelung eines Bremssystems (1) eines Nutzfahrzeugs (N), welches mindestens einen Elektromotor (E) aufweist, die dazu eingerichtet ist, mindestens ein Bremsmoment zu berechnen und dieses von dem mindestens einen Elektromotor (E) zu erzeugen, wobei die Regelungseinrichtung (2) ferner dazu eingerichtet ist, wiederholt den Bremsschlupf an mindestens einem Rad (R) des Nutzfahrzeugs (N) zu ermitteln, und falls der ermittelte Bremsschlupf einen vorbestimmten stabilitätskritischen Grenzwert erreicht oder wenn das notwendige Bremsmoment das maximale Bremsmoment des Elektromotors (E) übersteigt, das berechnete Bremsmoment auf den mindestens einen Elektromotor (E) und mindestens eine weitere Bremse (S) zu verteilen.

7. Regelungseinrichtung (2) für die Regelung eines Bremssystems (1) eines Nutzfahrzeugs (N) gemäß Anspruch 6, wobei die Berechnung des Bremsmoments radindividuell oder achsindividuell erfolgt.

8. Regelungseinrichtung (2) für die Regelung eines Bremssystems (1) eines Nutzfahrzeugs (N) gemäß Anspruch 6 oder 7, wobei die Regelungseinrichtung (2) dazu eingerichtet ist, das Bremsmoment radindividuell zu bestimmen und das Bremsmoment von jedem einem Rad zugehörigen Elektromotor (E) zu erzeugen, wobei der Bremsschlupf an mindestens einem Rad (R) des Nutzfahrzeugs (N) mit dem mindestens einen Elektromotor (E) geregelt wird.

9. Regelungseinrichtung (2) für die Regelung eines Bremssystems (1) eines Nutzfahrzeugs (N) gemäß Anspruch 6 oder 7, wobei die Regelungseinrichtung (2) dazu eingerichtet ist, das Bremsmoment achsindividuell zu bestimmen und das Bremsmoment von jedem einer Achse zugehörigen Elektromotor (E) zu erzeugen, wobei der Bremsschlupf an mindestens einem Rad (R) des Nutzfahrzeugs (N) mit der mindestens einen weiteren Bremse (S) geregelt wird.

**Claims**

1. Control method for braking a utility vehicle (N) having at least one electric motor (E), comprising the following steps:

   a. receiving a deceleration request by a braking system (1);

   b. calculating at least one braking torque by a control device (2);

   c. generating the braking torque calculated in step b) by the at least one electric motor (E);

   d. repeatedly determining the brake slip on at least one wheel (R) of the utility vehicle (N);

   e. if the brake slip of a wheel determined in step d) reaches a predetermined stability-critical limit value (G) or if the braking torque calculated in step b) exceeds the maximum braking torque of the electric motor (E): distributing the braking torque calculated in step b) to the at least one electric motor (E) and at least one further brake (S).

2. Control method according to claim 1 or 2, wherein in step b) the braking torque is calculated individually for each wheel, and in step c) the braking torque is generated by at least one electric motor (E) associated with a wheel.

3. Control method according to claim 1 or 2, further comprising a step f1): f1) controlling the brake slip on at least one wheel (R) of the utility vehicle (N) with at least one electric motor (E).

4. Control method according to claim 1, wherein in step b) the braking torque is calculated individually for each wheel, and in step c) the braking torque is generated by at least one electric motor (E) associated with an axle.

5. Control method according to claim 1 or 4, further comprising a step f2):
f2) controlling the brake slip on at least one wheel (R) of the utility vehicle (N) with the at least one further brake (S), if necessary.

6. Control device (2) for controlling a braking system (1) of a utility vehicle (N), which has at least one electric motor (E), which is configured to calculate at least one braking torque and to generate this from the at least one electric motor (E), wherein the control device (2) is further configured to repeatedly determine the brake slip on at least one wheel (R) of the utility vehicle (N), and if the determined brake slip reaches a predetermined stability-critical limit value or if the necessary braking torque exceeds the maximum braking torque of the electric motor (E), distributing the calculated braking torque to the at least one electric motor (E) and at least one further brake (S).

7. Control device (2) for controlling a brake system (1) of a utility vehicle (N) according to claim 6, wherein the braking torque is calculated on a wheel-individual or axle-individual basis.

8. Control device (2) for controlling a braking system (1) of a utility vehicle (N) according to claim 6 or 7, wherein the control device (2) is configured to determine the braking torque on an individual wheel basis and to generate the braking torque from each electric motor (E) associated with a wheel, wherein the brake slip on at least one wheel (R) of the utility vehicle (N) is controlled with the at least one electric motor (E).

9. Control device (2) for controlling a brake system (1) of a utility vehicle (N) according to claim 6 or 7, wherein the control device (2) is configured to determine the braking torque individually for each axle and to generate the braking torque of each electric motor (E) associated with an axle, wherein the brake slip on at least one wheel (R) of the utility vehicle (N) is controlled with the at least one further brake (5).

**Revendications**

1. Procédé de régulation du freinage d'un véhicule utilitaire (N) qui présente au moins un moteur électrique (E), comprenant les étapes suivantes :

   a. réception d'une demande de ralentissement par un système de freinage (1) ;
   b. calcul d'au moins un couple de freinage par un appareil de régulation (2) ;
   c. génération du couple de freinage calculé à l'étape b) par l'au moins un moteur électrique (E) ;
   d. détermination répétée du patinage au freinage sur au moins une roue (R) du véhicule utilitaire (N) ;
   e. si le patinage au freinage d'une roue déterminé à l'étape d) atteint une valeur seuil prédéterminée critique pour la stabilité (G) ou si le couple de freinage calculé à l'étape b) dépasse le couple de freinage maximal du moteur électrique (E) : distribution du couple de freinage calculé à l'étape b) entre l'au moins un moteur électrique (E) et l'au moins un frein (5) supplémentaire.

2. Procédé de régulation selon la revendication 1 ou 2, dans lequel, à l'étape b), le couple de freinage est calculé roue par roue, et à l'étape c), le couple de freinage est généré par au moins un moteur électrique (E) associé à une roue.

3. Procédé de régulation selon la revendication 1 ou 2, présentant en outre une étape f1) : f1) régulation du patinage au freinage sur au moins une roue (R) du véhicule utilitaire (N) avec au moins un moteur électrique (E).

4. Procédé de régulation selon la revendication 1, dans lequel, à l'étape b), le couple de freinage est calculé roue par roue, et à l'étape c), le couple de freinage est généré par au moins un moteur électrique (E) associé à un essieu.

5. Procédé de régulation selon la revendication 1 ou 4, présentant en outre une étape f2) :
f2) régulation du patinage au freinage sur au moins une roue (R) du véhicule utilitaire (N) avec l'au moins un frein (S) supplémentaire, si nécessaire.

**6.** Appareil de régulation (2) pour la régulation d'un système de freinage (1) d'un véhicule utilitaire (N) qui présente au moins un moteur électrique (E) qui est configuré pour calculer au moins un couple de freinage et générer celui-ci à partir de l'au moins un moteur électrique (E), dans lequel l'appareil de régulation (2) est en outre configuré pour déterminer de manière répétée le patinage au freinage sur au moins une roue (R) du véhicule utilitaire (N), et si le patinage au freinage déterminé atteint une valeur seuil prédéterminée critique pour la stabilité ou si le couple de freinage nécessaire dépasse le couple de freinage maximal du moteur électrique (E), répartir le couple de freinage calculé entre l'au moins un moteur électrique (E) et au moins un frein (S) supplémentaire.

**7.** Appareil de régulation (2) pour la régulation d'un système de freinage (1) d'un véhicule utilitaire (N) selon la revendication 6, dans lequel le calcul du couple de freinage est effectué roue par roue ou essieu par essieu.

**8.** Appareil de régulation (2) pour la régulation d'un système de freinage (1) d'un véhicule utilitaire (N) selon la revendication 6 ou 7, dans lequel l'appareil de régulation (2) est configuré pour déterminer le couple de freinage roue par roue et générer le couple de freinage de chaque moteur électrique (E) associé à une roue, dans lequel le patinage au freinage sur au moins une roue (R) du véhicule utilitaire (N) est régulé avec l'au moins un moteur électrique (E).

**9.** Appareil de régulation (2) pour la régulation d'un système de freinage (1) d'un véhicule utilitaire (N) selon la revendication 6 ou 7, dans lequel l'appareil de régulation (2) est configuré pour déterminer le couple de freinage essieu par essieu et générer le couple de freinage de chaque moteur électrique (E) associé à un essieu, dans lequel le patinage au freinage sur au moins une roue (R) du véhicule utilitaire (N) est régulé avec l'au moins un frein (S) supplémentaire.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013045584 A1
- DE 102017204000 A1
- US 2011221265 A1